# EUROPÄISCHE PATENTSCHRIFT

(11) **EP 1 245 096 B1**
(45) Veröffentlichungstag und Bekanntmachung des Hinweises auf die Patenterteilung: **08.11.2006**
(21) Anmeldenummer: 00988626.8
(22) Anmeldetag: 16.11.2000
(51) Int. Cl.: H04L 12/46, H04L 12/403, H04L 12/417

(54) **KOMMUNIKATIONSTEILNEHMER ZUR KOMMUNIKATION MIT EINEM FELDBUS UND EINEM NETZWERK**
COMMUNICATION SUBSCRIBER FOR COMMUNICATION WITH A FIELD BUS AND A NETWORK
PASSERELLE POUR COMMUNICATION AVEC UN BUS DE TERRAIN ET UN RESEAU

(30) Priorität: 17.11.1999 DE 19955306
(43) Veröffentlichungstag der Anmeldung: 02.10.2002
(73) Patentinhaber: SIEMENS AKTIENGESELLSCHAFT, 80333 München (DE)
(72) Erfinder: BIEHLER, Georg, 90473 Nürnberg (DE); GEHRING, Hubert, 90453 Nürberg (DE); LANGE, Ronald, 90766 Fürth (DE); PLAUM, Reiner, 91052 Erlangen (DE); TALANIS, Thomas, 91336 Heroldsbach (DE)
(86) Internationale Anmeldenummer: PCT/DE2000/004057
(87) Internationale Veröffentlichungsnummer: WO 2001/037492

(56) Entgegenhaltungen:
- US-A- 5 828 851
- KASTNER W ; CSEBITS C ; MAYER M : "Linux in factory automation? Internet controlling of fieldbus systems! " 1999 7TH IEEE CONFERENCE ON EMERGING TECHNOLOGIES AND FACTORY AUTOMATION. PROCEEDINGS ETFA'99, Bd. 1, 18. - 21. Oktober 1999, Seiten 27-31, XP000985987 Barcelona, Spain
- KUEHNEL TH: "ASPEKTE DER VERBINDUNG VON FELDBUS- MIT PROZESSBUSSYSTEMEN IN DER AUTOMATISIERUNGSTECHNIK" AUTOMATISIERUNGSTECHNISCHE PRAXIS - ATP,DE,OLDENBOURG VERLAG. MUNCHEN, Bd. 33, Nr. 8, 1. August 1991 (1991-08-01), Seiten 329-332, XP000262209 ISSN: 0178-2320
- ARPAIA P ET AL: "A distributed laboratory based on object-oriented measurement systems" MEASUREMENT,GB,INSTITUTE OF MEASUREMENT AND CONTROL. LONDON, Bd. 19, Nr. 3, 1. November 1996 (1996-11-01), Seiten 207-215, XP004059596 ISSN: 0263-2241
- MARCOS M ; ORIVE D ; ARTAZA F : "On the design and development of a gateway between MAP/MMS and PROFIBUS/FMS " PROCEEDINGS 1997 IEEE INTERNATIONAL WORKSHOP ON FACTORY COMMUNICATION SYSTEMS. WFCS'97, 1. - 3. Oktober 1997, Seiten 349-353, XP000995489 Barcelona, Spain
- GODDERTZ J: "DAS PROFIBUS-KONZEPT" ELEKTRONIK,DE,FRANZIS VERLAG GMBH. MUNCHEN, Bd. 38, Nr. 16, 4. August 1989 (1989-08-04), Seiten 71-74,76-78, XP000039482 ISSN: 0013-5658
- VOLZ M: "PROFIBUS-DP - DER SCHNELLE BRUDER STANDARDISIERTE KOMMUNIKATION FUR DIE DEZENTRALE PERIPHERIE" ELEKTRONIK,DE,FRANZIS VERLAG GMBH. MUNCHEN, Bd. 42, Nr. 26, 28. Dezember 1993 (1993-12-28), Seiten 50-53,58-60, XP000421408 ISSN: 0013-5658

## Beschreibung

Die vorliegende Erfindung betrifft einen Kommunikationsteilnehmer nach dem Oberbegriff von Anspruch 1.

Ein derartiger Kommunikationsteilnehmer ist aus Th. Kühnel: "Aspekte der Verbindung von Feldbus- mit Prozessbussystemen in der Automatisierungstechnik" in ATP Automatisierungstechnische Praxis, Bd. 33, Nr. 8, August 1991, Seiten 329 - 332, bekannt.

Ein weiterer Kommunikationsteilnehmer zwischen einem Netzwerk und einem Feldbus mit Feldgeräten ist aus W. Kastner et al.: "Linux in Factory Automation? Internet Controlling of Fieldbus Systems!", 7th IEEE International Conference on Emerging Technologies and Factory Automation, ETFA'99, Bd. 1, 18. - 21. Oktober 1999, Seiten 27 - 31, bekannt.

Der Erfindung liegt die Aufgabe zugrunde, eine alternative, besonders komfortable Möglichkeit des Datentauschs zu ermöglichen.

Gemäß der Erfindung wird diese Aufgabe durch den in Anspruch 1 angegebenen Kommunikationsteilnehmer gelöst.

Die Feldgeräte werden somit durch Software-Objekte repräsentiert.

Die Anzahl der Software-Objekte des speziellen Kommunikationsteilnehmers ist vorzugsweise frei projektierbar, insbesondere jedoch auf die Anzahl der an den Feldbus angeschlossenen Endgeräte abgestimmt.

Vorteilhaft sind den jeweiligen Software-Objekten innerhalb des Netzwerks eindeutige, zur zielgerichteten Datenübertragung gemäß dem für das Netzwerk vorgesehenen Übertragungsprotokoll geeignete Adressen zuordenbar.

Das adressierte Software-Objekt führt vorzugsweise je nach Art der mit dem Telegramm übermittelten Daten eine Vorverarbeitung der Daten des empfangenen Telegramms durch.

Weitere Merkmale, Vorteile und Anwendungsmöglichkeiten der Erfindung ergeben sich aus den Unteransprüchen, der nachfolgenden Beschreibung eines Ausführungsbeispiels anhand der Figuren und der Figuren selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

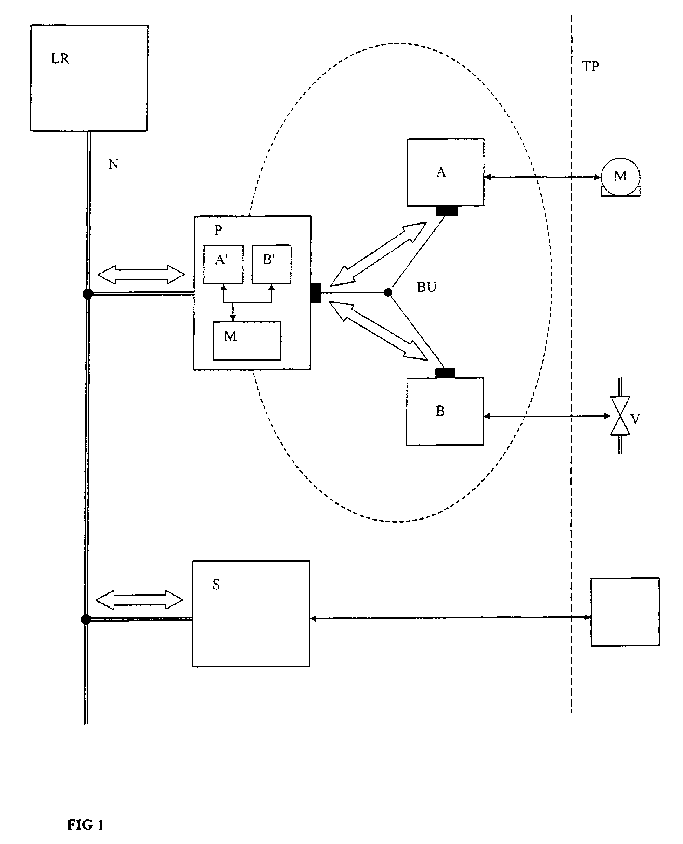

Gemäß FIG 1 sind an das Netzwerk N mehrere Kommunikationsteilnehmer LR, P, S angeschlossen, wobei ein Kommunikationsteilnehmer LR z.B. ein Leitrechner ist.

Der spezielle Kommunikationsteilnehmer P stellt eine Schnittstelle zwischen dem Netzwerk N und dem Feldbus BU dar. Über den Feldbus BU sind an den Kommunikationsteilnehmer P Endgeräte A, B angeschlossen, wobei die Endgeräte unterschiedlichste technologische Funktion (Aktoren, Sensoren, etc.), die bei der Automatisierung technischer Prozesse erforderlich sind, realisieren.

Für die weitere Beschreibung wird davon ausgegangen, dass an das Endgerät A ein Motor M und an das Endgerät B ein Ventil V angeschlossen ist. Der Motor M und das Ventil V sind Elemente eines zu steuernden technischen Prozesses TP; in der FIG 1 nur schematisch durch die Trennlinie angedeutet.

Im Kommunikationsteilnehmer P sind zur Kommunikation mit den Endgeräten A, B Software-Objekte A', B' vorgesehen, die aus Netzwerksicht die über das Netzwerk nicht direkt erreichbaren Endgeräte A, B repräsentieren.

In einer ersten vorteilhaften Ausgestaltung ist vorgesehen, dass, um der speziellen Funktionalität der jeweiligen Endgeräte A, B Rechnung zu tragen, als Software-Objekt A' ein auf die Motorenfunktionalität des Endgerätes A abgestellter Objekttyp A" instanziiert und als Software-Objekt B' ein auf die Ventilfunktionalität des Endgerätes B abgestellter Objekttyp B" instanziiert wird.

Die jeweiligen Objekttypen A", B" stellen eine auf die jeweils zu realisierenden Funktionalität abgestellte Kollektion von Eingangsdaten, Ausgangsdaten und Methoden (Elementfunktionen, Properties) M11, M12, M13, M14, V11, V12 zur Verfügung, mittels derer auf bestimmte Funktionalitäten der Endgeräte bzw. der diese repräsentierenden Objektklassen zugegriffen werden kann. Um z.B. den an das Endgerät A angeschlossenen Motor M abzuschalten, übermittelt der Leitrechner LR über das Netzwerk N an das Software-Objekt A' ein Telegramm, das die entsprechende Elementfunktion des Software-Objektes A anspricht. Die entsprechende Elementfunktion kann z.B. lauten "Motor aus". Analog verhält es sich für die Ventilfunktionalität des Endgerätes B.

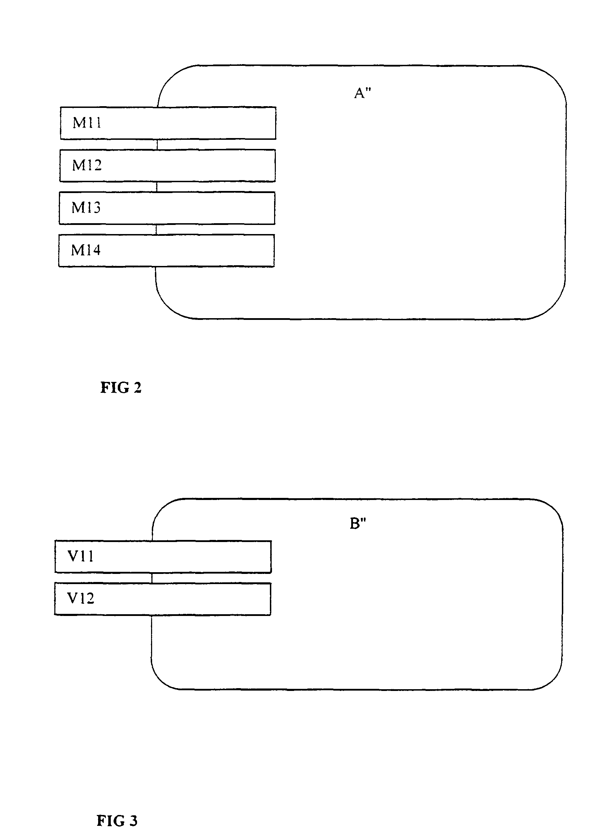

Die Figuren 2 und 3 zeigen eine graphische Darstellung der Objekttypen, die als Software-Objekte A', B' im Kommunikationsteilnehmer B zur Repräsentation eines Endgerätes A mit daran angeschlossenem Motor M bzw. zur Repräsentation eines Endgerätes B mit daran angeschlossenem Ventil V instanziiert werden. Gemäß FIG 2 weist der Objekttyp A" vier exportierte Daten bzw. Elementfunktionen M11, M12, M13, M14 auf. Als exportierte Daten M11, M12 kommen z.B. die Soll- und die Istdrehzahl des Motors M in Frage; als exportierte Elementfunktionen M13, M14 kommen z.B. Funktionen zum Ein- bzw. Ausschalten des Motors in Frage. Selbstverständlich kann man sich noch weitere exportierte Daten bzw. Elementfunktionen vorstellen, etwa Elementfunktionen zum Anfahren des Motors entsprechend einer vorgebbaren oder vorgegebenen Kennlinie, Daten zur Vorgabe des Bremsverhaltens etc.

FIG 3 zeigt den zur Repräsentation des Endgerätes B mit daran angeschlossenem Ventil V vorgesehenen Objekttyp B", mit zwei exportierten Daten bzw. Elementfunktionen V11, V12, wobei als Elementfunktionen V11, V12 z.B. Funktionen zum Öffnen bzw. zum Schließen des Ventils vorgesehen sein können.

Die jeweiligen Software-Objekte A', B' enthalten Programmcode, der geeignet ist, entweder übertragene Daten direkt in den gemeinsamen Speicherraum M des Feldbusses BU zu übertragen, oder aber Telegramme auszulösen, mittels derer die entsprechenden Daten direkt an die Endgeräte A, B übermittelt werden.

Beim Eintragen der Daten in den gemeinsamen Speicherraum M werden veränderte Daten im Rahmen der zyklischen Übertragung über den Feldbus BU an die Endgeräte A, B übermittelt, so dass auch ein zunächst nur in dem Speicherraum M geändertes Datum schließlich beim eigentlichen Adressat, z.B. dem Endgerät A, ankommt.

Beim Auslösen von Telegrammen für eine Datenübertragung über den Feldbus BU übernimmt das Software-Objekt A', B' die Transformation des über das Netzwerk N empfangenen Telegramms in das für den Feldbus BU vorgesehene Datenformat. Beim sogenannten Profibus BU, einem weit verbreiteten Feldbus BU, würden solche Telegramme als sogenannte azyklische, den zyklischen Datenaustausch nicht beeinflussende Telegramme versendet.

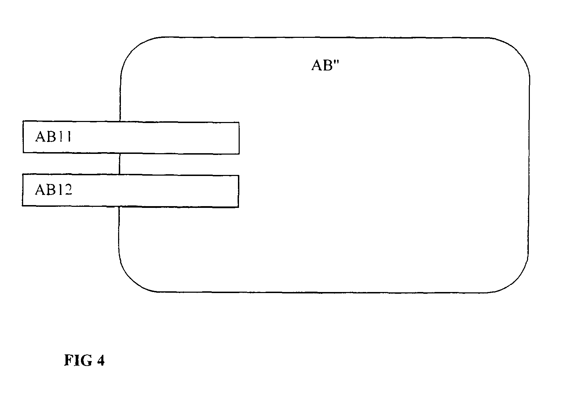

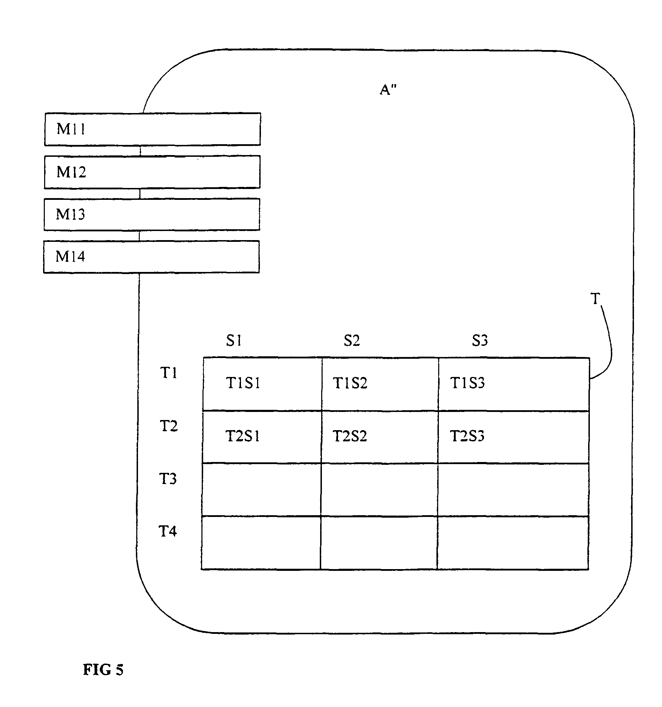

Alternativ oder zusätzlich ist es denkbar, dass entgegen dem oben beschriebenen Beispiel, bei dem die Software-Objekte A', B' Instanzen jeweils unterschiedlicher Objekttypen A", B" waren, die Software-Objekte A', B' Instanzen ein und desselben Objekttyps AB" sind, wobei der Objekttyp AB" dann zumindest Methoden AB11, AB12 zum Senden und Empfangen von Telegrammen über das Netzwerk N bereitstellt; vgl. FIG 4.

Zum Einschalten des an das Endgerät A angeschlossenen Motors M wird dann z.B. ausgehend vom Leitrechner LR ein Telegramm an das Software-Objekt A' gesendet und damit die Elementfunktion "Receive" AB11 der Instanz des entsprechenden Objekttyps AB" aktiviert, wobei die Elementfunktion "Receive" AB11 mittels im Software-Objekt A' vorgesehenen Codes dafür sorgt, dass das über Netzwerk N empfangene Telegramm in eine für den Feldbus BU geeignete Form transformiert wird und schließlich an das Endgerät A übermittelt wird.

In einer dritten Ausprägung ist es möglich, dass auch für unterschiedliche Schnittstellenfunktionalität der jeweils zu adressierenden Endgeräte A, B als Repräsentanz Instanzen ein und desselben Software-Objektes verwendet werden.

Dazu ist im Software-Objekt eine Tabelle T vorgesehen, wobei die einzelnen Tabelleneinträge T1, T2 zumindest zwei Positionen S1, S2 umfassen. Die erste Position T1S1 eines Tabelleneintrags T1, T2 repräsentiert eine Adresse des gemeinsamen Adressraums der an den Feldbus BU angeschlossenen Kommunikationsteilnehmer P, A, B, die zweite Position T1S2 den Speicherbedarf des Datums an der spezifizierten Adresse.

Wenn z.B. exemplarisch die Drehzahl des an das Endgerät A angeschlossenen Motors M verändert werden soll, kann die Solldrehzahl, die an einer definierten Position, z.B. der Adresse #768, des gemeinsamen Adressraums M hinterlegt wird, durch eine entsprechende, auf einer zugehörigen Kommunikation basierenden Anweisung modifiziert werden.

Dazu wird z.B. an in die ersten Position T1S1 der Tabelle angegebene Adresse, hier exemplarisch #768, der mit dem Telegramm übermittelte neue Sollwert eingetragen. Die Datenänderung im gemeinsamen Speicher M wird dem Endgerät A im Rahmen der zyklischen Datenübertragung über den Feldbus BU mitgeteilt.

Um die Benutzerfreundlichkeit noch weiter zu erhöhen, werden die einzelnen Einträge T1, T2 um eine zusätzliche Position S3 erweitert. Diese Position S3 umfasst eine Struktur, die zumindest Raum für eine deklarative Bezeichnung der entsprechenden Position der Tabelle T bietet. So kann z.B. eine erste Position T1 der Tabelle T als "Sollwert" T1S3 und eine weitere Position T2 der Tabelle T als "Istwert" T2S3 bezeichnet werden. Diese Bezeichner werden exportiert und zwar z.B. dadurch, dass sogenannte type-Libraries, die weitgehend den z.B. von der Programmiersprache C++ bekannten sog. "Header-Dateien" entsprechen, die die Bezeichner und die zugehörigen Daten enthalten, projektglobal bei allen Kommunikationsteilnehmern vorliegen.

Nachdem damit z.B. die Bezeichner "Sollwert" T1S3 und "Istwert" T2S3 im Leitrechner LR vorliegen, ist ein besonders übersichtliches Ansprechen des an das Endgerät A angeschlossenen Motors möglich, indem zum Abfragen des Istwertes über das Protokoll des Netzwerkes N das exportierte Datum Istwert des Software-Objektes A' abgefragt wird. Intern wird bei Abfragen des Datums Istwert über die Verknüpfung anhand der Tabelle T das in der durch die Deklaration Istwert repräsentierten Zeile T1 eingetragene Datum anhand der zugehörigen Adresse T1S1 ausgelesen. Das Auslesen kann dabei wieder aus dem globalen Speicherbereich M erfolgen. Der Istwert im Speicherbereich M ist aufgrund des zyklischen Datenaustausches über den Feldbus FB stets aktuell.

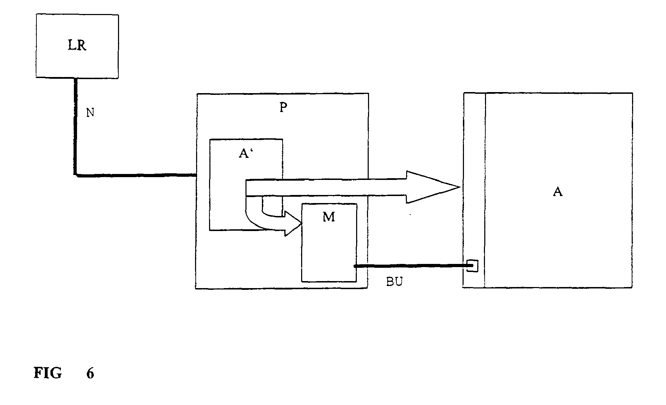

Ein spezielles Ausführungsbeispiel wird nun abschließend mit Bezug auf FIG 6 beschrieben:

Eine mögliche Umsetzung einer solche Konfiguration benutzt als Feldbus BU den sogenannten PROFIBUS DP mit einem DP-Master P und einem oder mehreren DP-Slaves A.

Der Leitrechner LR initiiert in dieser Umsetzung eine Kommunikation über den Objektbus DCOM über TCP/IP und Ethernet N an den DP-Master P und adressiert das Software-Objekt A'.

Das Software-Objekt A' ermittelt anhand von in einer Projektierungstabelle gespeicherten Daten den am besten für den PROFIBUS DP BU zu nutzenden Übertragungsweg. Die Projektierungstabelle enthält dabei für jede der Funktionen, die am DCOM Interface des Software-Objektes A' definiert sind, den Zugriffsweg und die für den Zugriff nötigen Zugriffsparameter.

Handelt es sich bei der aufgerufenen Funktion um einen so genannten DCOM Propertyzugriff auf ein lokal verfügbares Datum, bedient sich das Software-Objekt A' dabei des gemeinsamen Speichers M. Dieses trifft genau dann zu, wenn das DCOM Property auf ein E/A-Signal des DP-Slaves A abgebildet ist. Die E/A-Signale von DP-Slaves werden entsprechend der DP-Norm zyklisch in den gemeinsamen Speicher M am DP-Master P transportiert. Diese Funktion kann somit komplett auf dem DP-Master abgearbeitet werden, es ist keine Kommunikation zu diesem DP-Slave A nötig. Der Bus BU wird von der Kommunikation für den Zugriff auf diese Daten entlastet.

Handelt es sich um eine Funktion, die nur durch den DP-Slave abgearbeitet werden kann, d.h. Propertyzugriffe auf Daten, die sich nicht in den E/A-Signalen befinden oder Aufrufe von Methoden, wird das DCOM-Protokoll in ein speziell auf den PROFIBUS DP abgestimmtes Echtzeitprotokoll umgewandelt (quasi eine "Kurzform" der DCOM PDU, um die übertragenen Daten zu minimieren). Dieses Echtzeitprotokoll nutzt den PROFIBUS DPV1 Mechanismus "Datensätze schreiben", um die Protokolleinheiten an den DP-Slave A zu übertragen. Dieser empfängt das Protokoll und führt die Implementation der jeweiligen Funktion als Reaktion auf das empfangene Telegramm aus. Nach der Bearbeitung werden die Antwortparameter rückwärts vom DP-Slave A über das Echtzeitprotokoll unter Nutzung der PROFIBUS DPV1 Mechanismen "Alarm" in Kombination mit "Datensatz lesen" zum DP-Master P und dort in das Software-Objekt A' transportiert. Das Software-Objekt A' gibt die Antwortparameter an den Aufrufer LR über den Bus N und die dort verwendeten Kommunikationsmechanismen (DCOM) zurück.

## Patentansprüche

1. Kommunikationsteilnehmer, der zur Bildung einer Schnittstelle zwischen einem Netzwerk (N) und einem Feldbus (BU) einerseits an das Netzwerk (N) und andererseits an den Feldbus (BU) anschließbar ist,
wobei der Kommunikationsteilnehmer (P) Mittel zur Repräsentation von an dem Feldbus (BU) angeschlossenen Endgeräten (A, B) aufweist, die aus Netzwerksicht die über das Netzwerk (N) nicht erreichbaren Endgeräte (A, B) repräsentieren,
wobei die Mittel über das Netzwerk (N) mittels des für das Netzwerk (N) definierten Übertragungsprotokolls genauso wie der Kommunikationsteilnehmer (P) selbst oder weitere Kommunikationsteilnehmer (S) ansprechbar sind,
wobei der Feldbus (N) einen dem Kommunikationsteilnehmer (P) und den Endgeräten (A, B) gemeinsamen Adressraum synchronisiert, der zumindest im Speicher (M) des Kommunikationsteilnehmers (P) abbildbar ist,
wobei im Falle eines über das Netzwerk (N) bei dem Kommunikationsteilnehmer (P) eintreffenden, ein repräsentiertes Endgerät adressierenden Telegramms die Mittel die Abwicklung der gemäß dem für das Netzwerk (N) definierten Übertragungsprotokoll erforderlichen Schritte zum Empfang eines Telegramms ausführen,
**dadurch gekennzeichnet,**
**dass** die Mittel Software-Objekte (A', B') als Instanz eines auf die jeweilige Funktionalität des Endgerätes (A, B) abgestellten Objekttyps aufweisen, die eine auf die jeweilige Funktionalität der Endgeräte (A, B) abgestellte Kollektion von Ein- und Ausgangsdaten und Methoden zur Verfügung stellen, mittels derer auf bestimmte Funktionalitäten der Endgeräte (A, B) bzw. der diese repräsentierenden Objektklassen zugegriffen werden kann.

2. Kommunikationsteilnehmer nach Anspruch 1, wobei die Anzahl der Software-Objekte (A', B') frei projektierbar, insbesondere auf die Anzahl der an den Feldbus (BU) angeschlossenen Endgeräte (A, B), abgestimmt ist.

3. Kommunikationsteilnehmer nach Anspruch 1, wobei den Software-Objekten (A', B') innerhalb des Netzwerks (N) eindeutige, zur zielgerichteten Datenübertragung gemäß dem für das Netzwerk (N) vorgesehenen Übertragungsprotokoll geeignete Adressen zuordenbar sind.

4. Kommunikationsteilnehmer nach Anspruch 1, wobei das adressierte Software-Objekt (A', B') eine Vorverarbeitung der Daten des empfangenen Telegramms durchführt.

5. Kommunikationsteilnehmer nach Anspruch 1, wobei das Software-Objekt (A', B') eine Tabelle mit mindestens einem Tabellenelement aufweist, wobei in dem Tabellenelement zumindest eine Adresse (ADR) und eine Dimensionsinformation (DIM) eines Datums (DAT) abspeicherbar ist, wobei als Adresse (ADR) die auf den gemeinsamen Adressraum des Feldbusses (BU) bezogene Adresse eines vom Endgerät (A, B) exportierten Eingangs- oder Ausgangswertes und als Dimensionsinformation (DIM) der Speicherplatzbedarf dieses Eingangs- oder Ausgangswertes im Adressraum eintragbar ist.

## Claims

1. Communications subscriber which, in order to form an interface between a network (N) and a field bus (BU), can be connected firstly to the network (N) and secondly to the field bus (BU),
where the communications subscriber (P) has means for representing terminals (A, B) connected to the field bus (BU), which, from the point of view of the network, represent the terminals (A, B) which cannot be reached via the network (N),
where the means can be addressed via the network (N), using the transfer protocol defined for the network (N), in exactly the same way as the communications subscriber (P) itself or other communications subscribers (S),
where the field bus (BU) synchronizes an address space which is shared by the communications subscriber (P) and the terminals (A, B) and which can be mapped at least in the memory (M) of the communications subscriber (P),
where, in the case of a message arriving on the communications subscriber (P) via the network (N) and addressing a represented terminal the means
handle the steps required in line with the transfer protocol defined for the network (N) in order to receive a message,
**characterized in that**
the means have software objects (A', B') as an instance of an object type geared to the respective functionality of the terminal (A, B), said software objects providing a collection of input and output data and methods which is geared to the respective functionality of the terminals (A, B) and which can be used to access particular functionalities of the terminals (A, B) or of the object classes representing them.

2. Communications subscriber according to Claim 1, where the number of software objects (A', B') is adjusted in a freely definable manner, particularly to suit the number of terminals (A, B) connected to the field bus (BU).

3. Communications subscriber according to Claim 1, where the software objects (A', B') can be assigned unique addresses within the network (N) which are suitable for targeted data transfer in line with the transfer protocol provided for the network (N).

4. Communications subscriber according to Claim 1, where the addressed software object (A', B') carries out preprocessing for the data in the received message.

5. Communications subscriber according to Claim 1, where the software object (A', B') has a table containing at least one table element, where the table element can store at least one address (ADR) and a dimension information item (DIM) for a data item (DAT), the address (ADR) which can be entered being the address, relating to the shared address space of the field bus (BU), of an input or output value exported by the terminal (A, B), and the dimension information item (DIM) which can be entered being the memory space requirement for this input or output value in the address space.

## Revendications

1. Utilisateur de communication qui, pour la formation d'une interface entre un réseau (N) et un bus de terrain (BU), est raccordable d'une part au réseau (N) et d'autre part au bus de terrain (BU),
tel que l'utilisateur de communication (P) comporte des moyens qui sont destinés à la représentation de terminaux (A, B) raccordés au bus de terrain (BU) et qui représentent du point de vue du réseau les terminaux (A, B) non atteignables par l'intermédiaire du réseau (N),
tel que les moyens sont adressables via le réseau (N) au moyen du protocole de transmission défini pour le réseau (N) exactement comme l'utilisateur de communication (P) lui-même ou d'autres utilisateurs de communication (S),
tel que le bus de terrain (Bu) synchronise un espace d'adressage qui est commun à l'utilisateur de communication (P) et aux terminaux (A, B) et qui peut être reproduit au moins dans la mémoire (M) de l'utilisateur de communication (P),
tel que, dans le cas d'un télégramme arrivant à l'utilisateur de communication (P) via le réseau (N) et s'adressant à un terminal représenté, les moyens mettent en oeuvre le développement des étapes nécessaires selon le protocole de transmission défini pour le réseau (N) en vue de la réception d'un télégramme,
**caractérisé par le fait que**
les moyens comportent des objets logiciels (A', B'), comme instance d'un type d'objet adapté à la fonctionnalité respective du terminal (A, B), qui mettent à disposition une collection, adaptée à la fonctionnalité respective du terminal (A, B), de données d'entrée et de sortie et de méthodes au moyen desquelles on peut accéder à certaines fonctionnalités des terminaux (A, B) ou des classes d'objets représentant ceux-ci.

2. Utilisateur de communication selon la revendication 1, tel que le nombre des objets logiciels (A', B') peut être librement choisi et réglé notamment sur le nombre des terminaux (A, B) raccordés au bus de terrain (BU).

3. Utilisateur de communication selon la revendication 1, tel que peuvent être associées aux objets logiciels (A', B') à l'intérieur du réseau (N) des adresses univoques convenant à la transmission de données dirigée vers une destination selon le protocole de transmission prévu pour le réseau (N).

4. Utilisateur de communication selon la revendication 1, tel que l'objet logiciel adressé (A', B') effectue un prétraitement des données du télégramme reçu.

5. Utilisateur de communication selon la revendication 1, tel que l'objet logiciel (A', B') comporte un tableau avec au moins un élément de tableau, au moins une adresse (ADR) et une information de dimension (DIM) d'une donnée (DAT) étant mémorisables dans l'élément de tableau, l'adresse, qui se rapporte à l'espace d'adressage commun du bus de terrain (BU), d'une valeur d'entrée ou de sortie exportée par le terminal (A, B) étant enregistrable comme adresse (ADR) et l'encombrement en mémoire de cette valeur d'entrée ou de sortie dans l'espace d'adressage étant enregistrable comme information de dimension (DIM).
